# EUROPEAN PATENT APPLICATION

(11) **EP 4 693 996 A1**
(43) Date of publication of application: **11.02.2026**
(21) Application number: 23935174.5
(22) Date of filing: 26.12.2023
(51) Int. Cl.: H04L 5/00

(54) **NETWORK COLLABORATIVE SENSING METHOD, ELECTRONIC DEVICE, AND COMPUTER-READABLE MEDIUM**

(30) Priority: 28.04.2023 CN 202310492583
(71) Applicant: ZTE CORPORATION, Shenzhen, Guangdong 518057 (CN)
(72) Inventor: XIA, Shuqiang, Shenzhen, Guangdong 518057 (CN); BAI, Chen, Shenzhen, Guangdong 518057 (CN); MA, Yihua, Shenzhen, Guangdong 518057 (CN); HU, Liujun, Shenzhen, Guangdong 518057 (CN); YU, Guanghui, Shenzhen, Guangdong 518057 (CN)
(74) Representative: Canzler & Bergmeier Patentanwälte Partnerschaft mbB
(86) International application number: PCT/CN2023/142037
(87) International publication number: WO 2024/222008

(57) **Abstract**

The present application provides a network collaborative sensing method applied to a first node. The method includes: acquiring (S101) first sensing information for a sensing target, and determining (S101) one second node in a plurality of second nodes based on the first sensing information; sending (S102) the first sensing information to the second node; acquiring (S103), from the second node, second sensing information for the sensing target, where the second sensing information is obtained by sensing the sensing target by the second node; and obtaining (S104) a sensing result based on the first sensing information and the second sensing information. The present disclosure further provides an electronic device and a computer-readable storage medium.

## Description

### TECHNICAL FIELD

Embodiments of the present disclosure relate to, but are not limited to, the technical field of communications, and specifically relate to a network collaborative sensing method, an electronic device, and a computer-readable medium.

### BACKGROUND

The networked sensing of cellular networks has become more and more widespread due to multiple advantages.

With the integration of sensing and communication functions, sensing is expanded from a point-to-point link capability to a multi-point collaborative networking capability, and the network capability is also expanded from the traditional single communication dimension to double dimensions of combined sensing and communication. In the face of complex and varied sensing tasks, the sensing capability of a single station is often difficult to meet the requirements, and therefore, network collaborative sensing is required to realize advantage complementation among communication nodes of different types, at different positions and with different capabilities.

However, sensing signals of sensing nodes, such as base stations or terminals, in a cellular network may interfere with each other, causing serious degradation of the network collaborative sensing performance.

### SUMMARY

Embodiments of the present disclosure provide a network collaborative sensing method, an electronic device, and a computer-readable medium, which can improve the performance of collaborative sensing in a cellular network.

As a first aspect of the present disclosure, there is provided a network collaborative sensing method applied to a first node, including: acquiring first sensing information for a sensing target, and determining one second node in a plurality of second nodes based on the first sensing information; sending the first sensing information to the one second node; acquiring, from the one second node, second sensing information for the sensing target, wherein the second sensing information is obtained by sensing the sensing target by the one second node; and obtaining a sensing result based on the first sensing information and the second sensing information.

As a second aspect of the present disclosure, there is provided a network collaborative sensing method applied to a second node, including: receiving first sensing information sent from a first node; and sensing a sensing target based on the first sensing information to obtain second sensing information for the sensing target, and sending the second sensing information to the first node so that the first node senses the sensing target based on the first sensing information and the second sensing information.

As a third aspect of the present disclosure, there is provided a network collaborative sensing method applied to a first node, including: acquiring first sensing information for a sensing target, and determining, based on the first sensing information, one second node in a plurality of second nodes and one third node in a plurality of third nodes; sending the first sensing information to the one second node so that the one second node sends a second sensing signal to the sensing target; acquiring second sensing information for the sensing target from the one third node, wherein the second sensing information is obtained by sensing the sensing target by the one third node based on the second sensing signal; and obtaining a sensing result based on the first sensing information and the second sensing information.

As a fourth aspect of the present disclosure, there is provided a network collaborative sensing method applied to an integrated sensing and communication base station, wherein the integrated sensing and communication base station includes a main base station and a plurality of slave base stations, and the method includes: sending a first sensing signal from the main base station to a sensing target; determining first sensing information for the sensing target based on an echo signal of the first sensing signal; determining, by the main base station, one slave base station in the plurality of slave base stations based on the first sensing information, and sending the first sensing information to the one slave base station; sending, by the one slave base station, a second sensing signal to the sensing target based on the first sensing information, sensing the sensing target based on an echo signal of the second sensing signal to acquire second sensing information, and sending the second sensing information to the main base station; and obtaining, by the main base station, a sensing result based on the first sensing information and the second sensing information.

As a fifth aspect of the present disclosure, there is provided a network collaborative sensing method applied to an integrated sensing and communication base station, wherein the integrated sensing and communication base station includes a main base station and a plurality of slave base stations including a first slave base station and a second slave base station, and the method includes: sending, by the main base station, a first sensing signal to a sensing target and designating a first slave base station; determining, by the first slave base station, first sensing information for the sensing target based on an echo signal of the first sensing signal, and sending the first sensing information to the main base station; determining, by the main base station, one second slave base station in the plurality of slave base stations based on the first sensing information; sending, by the main base station, the first sensing information to the one second slave base station; sending, by the one second slave base station, a second sensing signal to the sensing target based on the first sensing information, sensing the sensing target based on an echo signal of the second sensing signal to acquire second sensing information, and sending the second sensing information to the main base station; and obtaining, by the main base station, a sensing result based on the first sensing information and the second sensing information.

As a sixth aspect of the present disclosure, there is provided a network collaborative sensing method applied to an integrated sensing and communication main base station and a plurality of user equipments (UEs), wherein the method includes: sending a first sensing signal from the main base station to a sensing target, and determining first sensing information for the sensing target based on an echo signal of the first sensing signal; determining one UE in the plurality of UEs by the main base station based on the first sensing information; sending the first sensing information from the main base station to the one UE, and sending a second sensing signal from the main base station to the sensing target; sensing, by the one UE, the sensing target based on the first sensing information sent from the main base station and an echo signal of the second sensing signal to obtain second sensing information, and sending the second sensing information to the main base station; and obtaining, by the main base station, a sensing result based on the first sensing information and the second sensing information.

As a seventh aspect of the present disclosure, there is provided a network collaborative sensing method applied to an integrated sensing and communication main base station and a plurality of UEs, wherein the plurality of UEs include a first UE and a second UE, and the method includes: sending a first sensing signal from the main base station to a sensing target, and determining first sensing information for the sensing target based on an echo signal of the first sensing signal; determining a first UE and a second UE in the plurality of UEs by the main base station based on the first sensing information, and sending the first sensing information to the first UE; sending, by the first UE, a second sensing signal based on the first sensing information; sensing, by the second UE, the sensing target based on an echo signal of the second sensing signal to obtain second sensing information, and sending the second sensing information to the main base station; and obtaining, by the main base station, a sensing result based on the first sensing information and the second sensing information.

As an eighth aspect of the present disclosure, there is provided a network collaborative sensing method applied to an integrated sensing and communication main base station and a plurality of UEs, wherein the plurality of UEs include a first UE and a second UE, and the method includes: determining, by the main base station, first sensing information for a sensing target, wherein the first sensing information for the sensing target is determined by the main base station based on an echo signal of a communication signal sent from a UE; determining a first UE and a second UE in the plurality of UEs by the main base station based on the first sensing information, and sending the first sensing information to the first UE; sending, by the first UE, a second sensing signal based on the first sensing information; sensing, by the second UE, the sensing target based on an echo signal of the second sensing signal to obtain second sensing information, and sending the second sensing information to the main base station; and obtaining, by the main base station, a sensing result based on the first sensing information and the second sensing information.

As a ninth aspect of the present disclosure, there is provided a network collaborative sensing method applied to an integrated sensing and communication base station and a plurality of UEs, wherein the plurality of UEs include a first UE and a second UE, the integrated sensing and communication base station includes a main base station and a plurality of slave base stations, and the method includes: sending a first sensing signal from the main base station to a sensing target, and determining first sensing information for the sensing target based on an echo signal of the first sensing signal; determining, by the main base station, one slave base station in the plurality of slave base stations, and a first UE and a second UE in the plurality of UEs, based on the first sensing information; sending, by the main base station, the first sensing information to the first UE and the one slave base station; sending, by the first UE, a second sensing signal to the sensing target based on the first sensing information; sensing, by the second UE, the sensing target based on an echo signal of the second sensing signal to obtain second sensing information, and sending the second sensing information to the main base station; sending, by the one slave base station, a third sensing signal to the sensing target based on the first sensing information, and sensing the sensing target based on an echo signal of the third sensing signal to acquire third sensing information, and sending the third sensing information to the main base station; and obtaining, by the main base station, a sensing result based on the first sensing information, the second sensing information, and the third sensing information.

As a tenth aspect of the present disclosure, there is provided an electronic device, including: at least one processor; and a storage device having at least one program stored thereon which, when executed by the at least one processor, causes the at least one processor to implement the network collaborative sensing method according to the present disclosure.

As an eleventh aspect of the present disclosure, there is provided a computer-readable storage medium storing an executable program thereon which, when executed, causes the network collaborative sensing method according to the present disclosure to be implemented.

According to the network collaborative sensing method, the electronic device, and the computer-readable storage medium of the present disclosure, the performance of collaborative sensing in a cellular network can be improved, and a more precise sensing result of a sensing target can be obtained, while the breadth of the sensing range and the sensing precision are also considered. Therefore, the problem that the sensing performance is reduced and cannot meet the sensing requirement due to the fact that a large number of sensing nodes are provided in the cellular environment and the sensing signals interfere with each other is solved.

### BRIEF DESCRIPTION OF DRAWINGS

Accompanying drawings are provided for further understanding of the present disclosure and constitute a part of the specification. Hereinafter, these drawings are intended to explain the technical solutions of the present disclosure together with the following specific implementations, but should not be considered as a limitation of the present disclosure. In the drawings:
FIG. 1 shows a flowchart of a network collaborative sensing method according to an embodiment of the present disclosure;
FIG. 2 shows a flowchart of a network collaborative sensing method according to another embodiment of the present disclosure;
FIG. 3 shows a flowchart of a network collaborative sensing method according to another embodiment of the present disclosure;
FIG. 4 shows a flowchart of a network collaborative sensing method according to another embodiment of the present disclosure;
FIG. 5 shows a flowchart of a network collaborative sensing method according to another embodiment of the present disclosure;
FIG. 6 shows a flowchart of a network collaborative sensing method according to another embodiment of the present disclosure;
FIG. 7 shows a flowchart of a network collaborative sensing method according to another embodiment of the present disclosure;
FIG. 8 shows a flowchart of a network collaborative sensing method according to another embodiment of the present disclosure;
FIG. 9 shows a flowchart of a network collaborative sensing method according to another embodiment of the present disclosure;
FIG. 10 shows a schematic diagram of a network collaborative sensing system according to an embodiment of the present disclosure;
FIG. 11 shows a schematic diagram of a network collaborative sensing system according to another embodiment of the present disclosure;
FIG. 12 shows a schematic diagram of a network collaborative sensing system according to another embodiment of the present disclosure;
FIG. 13 shows a schematic diagram of a network collaborative sensing system according to another embodiment of the present disclosure;
FIG. 14 shows a schematic diagram of a network collaborative sensing system according to another embodiment of the present disclosure;
FIG. 15 shows a schematic diagram of a network collaborative sensing system according to another embodiment of the present disclosure;
FIG. 16 is a block diagram of an electronic device according to an embodiment of the present disclosure; and
FIG. 17 is a block diagram of a computer-readable storage medium according to an embodiment of the present disclosure.

### DETAIL DESCRIPTION OF EMBODIMENTS

To improve understanding of the technical solutions of the present disclosure for those skilled in the art, the network collaborative sensing method, the electronic device, and the computer-readable medium of the present disclosure will be described below in detail in conjunction with the accompanying drawings.

Exemplary embodiments will be described more sufficiently below with reference to the accompanying drawings, but which may be embodied in different forms and should not be construed as limited to the embodiments set forth herein. Rather, these embodiments are provided so that the present disclosure will be thorough and complete, and will fully convey the scope of the present disclosure to those skilled in the art.

The embodiments of the present disclosure and features thereof may be combined with each other as long as they are not contradictory.

As used herein, the term "and/or" includes any and all combinations of one or more of the associated listed items.

The terminology used herein is for the purpose of describing specific embodiments only and is not intended to limit the present disclosure. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined herein.

The cellular mobile system has a strong networking capability, and an integrated sensing and communication mobile network system can be constructed through large-scale deployment of the cellular network and interaction between a base station and a terminal, between base stations, and between a base station and a core network. The cellular system-based network collaborative sensing can fully utilize base station resources of the cellular system, which not only reduces the cost of the integrated sensing and communication, but also realizes the networking capability of sensing. By reasonably selecting the sensing base stations in the cellular system and sharing, supplementing or combining the sensing data, the problem of mutual interference of signals caused by a large number of nodes can be mitigated while maintaining the advantages of the cellular network. Meanwhile, the network sensing can avoid shielding through cooperation among base stations to further improve the sensing performance without upgrading the hardware.

The sensing network in a narrow sense refers to a system with the capabilities of target positioning (ranging, velocity measuring and angle measuring), target imaging, target detection, target tracking, target identification, and the like; while the sensing network in a broad sense refers to a system which can sense all services, networks, users and terminals, and attributes and states of environmental objects. In an integrated sensing and communication mobile network, sensing modes may be divided into active modes and passive modes. The passive sensing means that a sensor (a network side or a terminal) senses by acquiring electromagnetic waves (such as Terahertz waves) emitted from a target object, or by reflecting electromagnetic waves not from the sensor and the target object, while the active sensing means that a sensor (a network side or a terminal) sends electromagnetic waves which are then reflected by a target object, and receives echoes for sensing. The node receiving the reflected waves may not be the same as the node sending the detection signal, which means that a plurality of nodes of the sensor may perform joint processing in a certain form to implement the active sensing.

In network sensing, wireless sensing signal links may be classified into the following categories: (1) base station echo aware sensing link: a base station sends a sensing signal and receives an echo signal; (2) sensing link between base stations: a second base station receives a sensing signal sent from a first base station; (3) uplink sensing link: a base station receives a sensing signal sent from a UE; (4) downlink sensing link: a UE receives a sensing signal sent from a base station; (5) terminal echo sensing link: a UE sends a sensing signal and receives an echo signal; and (6) sensing link between terminals: UE2 receives a sensing signal sent from UE1. In a real system, different sensing links may be selected based on different sensing requirements, one or more sending nodes and/or receiving nodes may be provided for each sensing link, and the actual sensing system may include various types of sensing links.

In an integrated sensing and communication cellular mobile network, the integrated sensing and communication multiple access technology realizes linked access of sensing and communication by coordinating sensing information and communication information, thereby reducing network access conflict and congestion, and realizing efficient closed-loop information flow control. Multiple access refers to the situation where multiple users access a common transmission medium for communication, and a different characteristic is assigned to signals from each user to distinguish different users. The cellular system typically employs frequency division multiple access (FDMA), time division multiple access (TDMA), code division multiple access (CDMA), orthogonal frequency division multiple access (OFDMA), space division multiple access (SDMA), and the like. TDMA realizes multiple access of different users by dividing different time resources for different users; FDMA distinguishes different users by allocating channels with the same time slot but different frequencies to different users; CDMA realizes mutual distinguishing and matching identification of receiving ends by adopting different coding sequences for signals used for sending information by different users; OFDMA distinguishes different users by performing subcarrierization on channels through OFDM, and then allocating a different OFDM time-frequency resource block to each transceiving link; and SDMA transmits information for multiple users in different directions via orthogonal spatial beam sets.

Sensing signals of sensing nodes, such as base stations or terminals, in the cellular network may interfere with each other, and thereby cause serious degradation of the sensing performance.

### First embodiment

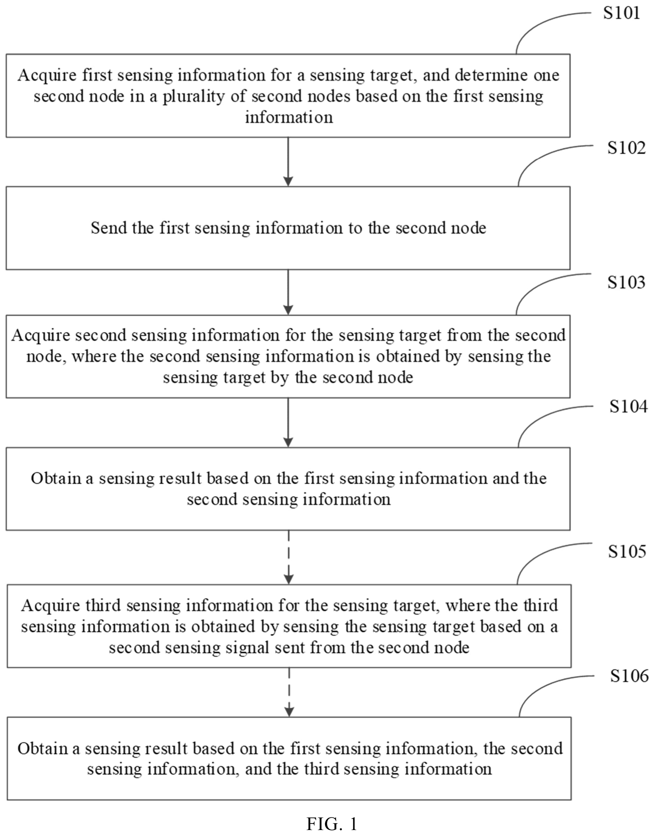

FIG. 1 shows a flowchart of a network collaborative sensing method according to an embodiment of the present disclosure. As shown in FIG. 1, a network collaborative sensing method according to an embodiment of the present disclosure is applied to a first node, and includes the following operations S101 to S104.

Operation S101 includes acquiring first sensing information for a sensing target, and determining one second node in a plurality of second nodes based on the first sensing information.

Operation S102 includes sending the first sensing information to the second node.

Operation S103 includes acquiring second sensing information for the sensing target from the second node, where the second sensing information is obtained by sensing the sensing target by the second node.

Operation S104 includes obtaining a sensing result based on the first sensing information and the second sensing information.

According to some embodiments of the present disclosure, in operation S101, acquiring the first sensing information for the sensing target includes:
sending a first sensing signal from the first node to the sensing target; and
receiving an echo signal of the first sensing signal, and determining the first sensing information for the sensing target based on the echo signal of the first sensing signal.

According to some embodiments of the present disclosure, in operation S101, acquiring the first sensing information for the sensing target includes:
sending a first sensing signal from the first node to the sensing target, and designating a third node for receiving an echo signal of the first sensing signal; and
receiving the first sensing information for the sensing target sent from the third node, where the first sensing information is determined by the third node based on the echo signal of the first sensing signal.

According to some embodiments of the present disclosure, the second sensing information may be obtained by sending a second sensing signal from the second node to the sensing target and sensing the sensing target by the second node. Specifically, the second sensing information is obtained from an echo signal of the second sensing signal by sending the second sensing signal from the second node to the sensing target based on the first sensing information.

According to some embodiments of the present disclosure, the second sensing information may be obtained by sending a first sensing signal from the first node to the sensing target and sensing the sensing target by the second node. Specifically, the second sensing information is obtained by the second node based on an echo signal of a first sensing signal sent from the first node to the sensing target. The second sensing signal may be the same or different from the first sensing signal.

Here, the echo signal refers to a signal that returns to an original signal source after being reflected by an object, or a signal reflected to another device. For example, a signal source may emit electromagnetic or acoustic wave signals toward a target, and when the signals encounter a target object, part of the signals will be reflected back to the signal source or to another device, forming echo signals.

According to some embodiments of the present disclosure, the first sensing information for the sensing target includes: first position information for the sensing target, first velocity information for the sensing target, and first direction information for the sensing target. The second sensing information for the sensing target includes: second position information for the sensing target, second velocity information for the sensing target, and second direction information for the sensing target. The second sensing information is more precise than the first sensing information.

According to some embodiments of the present disclosure, in operation S101, determining the one second node in the plurality of second nodes based on the first sensing information includes:
determining, based on the first position information for the sensing target, a second node closest to the sensing target in the plurality of second nodes, and/or determining, based on the first velocity information for the sensing target, a second node which enables a maximum radial velocity of the sensing target in the plurality of second nodes. Here, the radial velocity is a velocity component of the motion of the sensing target in the observer's line of sight direction, i.e., a projection of a velocity vector in the line of sight direction. If the radial velocity has a positive value, it indicates that the target is moving away from the observation point, whereas if the radial velocity has a negative value, it indicates that the target is approaching the observation point.

According to some embodiments of the present disclosure, the method further includes: operations S105 to S106.

Operation S105 includes acquiring third sensing information for the sensing target, where the third sensing information is obtained by sensing the sensing target based on the second sensing signal sent from the second node.

Operation S106 includes obtaining a sensing result based on the first sensing information, the second sensing information, and the third sensing information.

According to some embodiments of the present disclosure, acquiring the third sensing information for the sensing target includes: receiving an echo signal of the second sensing signal sent from the second node to the sensing target, and acquiring the third sensing information based on the echo signal.

According to some embodiments of the present disclosure, relative positions of the first, second, and third nodes are known.

It should be noted that, in this embodiment, the first node may be an integrated sensing and communication main base station, and the second node may be an integrated sensing and communication slave base station or a user equipment UE. The third node may be a slave base station or a user equipment UE.

According to the embodiment of the present disclosure, by acquiring first sensing information for a sensing target, and determining one second node in a plurality of second nodes based on the first sensing information; sending the first sensing information to the second node; acquiring second sensing information for the sensing target from the second node, where the second sensing information is obtained by sensing the sensing target by the second node; and obtaining a sensing result based on the first sensing information and the second sensing information, the performance of collaborative sensing in a cellular network can be improved, and a more precise sensing result of a sensing target can be obtained, while the breadth of the sensing range and the sensing precision are also considered.

Therefore, the problem that the sensing performance is reduced and cannot meet the sensing requirement due to the fact that a large number of sensing nodes are provided in the cellular environment and the sensing signals interfere with each other is solved.

### Second embodiment

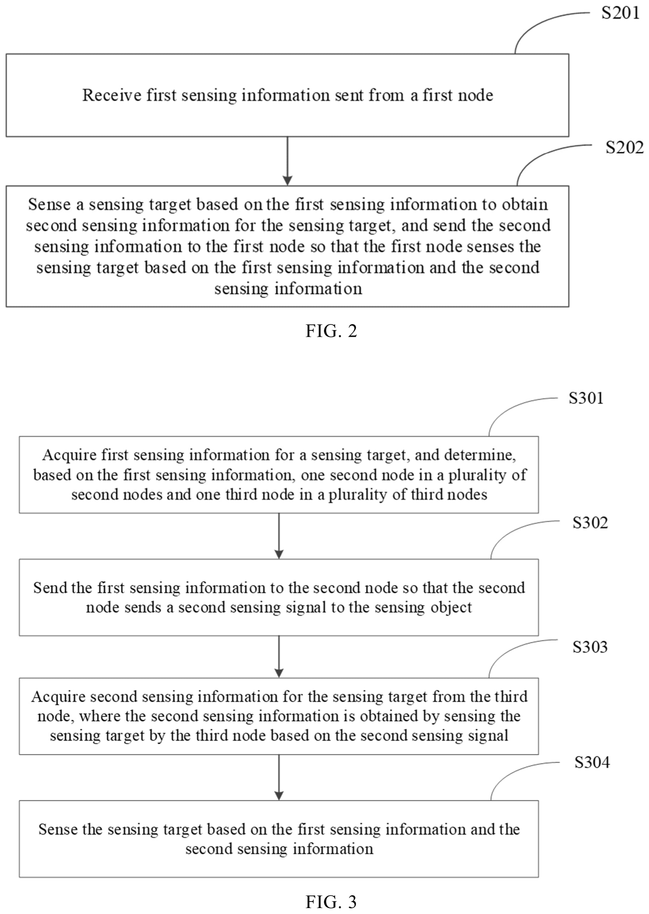

FIG. 2 shows a flowchart of a network collaborative sensing method according to another embodiment of the present disclosure. As shown in FIG. 2, a network collaborative sensing method according to an embodiment of the present disclosure is applied to a second node, and includes the following operations S201 to S202.

Operation S201 includes receiving first sensing information sent from a first node.

Operation S202 includes sensing a sensing target based on the first sensing information to obtain second sensing information for the sensing target, and sending the second sensing information to the first node so that the first node obtains a sensing result based on the first sensing information and the second sensing information.

According to some embodiments of the present disclosure, sensing the sensing target based on the first sensing information to obtain the second sensing information for the sensing target in operation S202 includes:
sending a second sensing signal to the sensing target based on the first sensing information; and
receiving an echo signal of the second sensing signal, and determining the second sensing information for the sensing target based on the echo signal of the second sensing signal.

According to some embodiments of the present disclosure, the first sensing information is obtained by sensing the sensing target by the first node.

According to some embodiments of the present disclosure, the first sensing information is obtained by sensing the sensing target by a third node, where the third node is designated by the first node.

According to some embodiments of the present disclosure, sending the second sensing signal to the sensing target based on the first sensing information includes:
determining, based on the first sensing information, a transmission beam, a period and/or a power of the second sensing signal; and
sending the second sensing signal to the sensing target based on the transmission beam, the period and/or the power of the second sensing signal.

It should be noted that, in this embodiment, the second node may be an integrated sensing and communication slave base station.

According to the embodiment of the present disclosure, by receiving first sensing information sent from a first node; and sensing a sensing target based on the first sensing information to obtain second sensing information for the sensing target, and sending the second sensing information to the first node so that the first node obtains a sensing result based on the first sensing information and the second sensing information, the performance of collaborative sensing in a cellular network can be improved, and a more precise sensing result of a sensing target can be obtained, while the breadth of the sensing range and the sensing precision are also considered.

Therefore, the problem that the sensing performance is reduced and cannot meet the sensing requirement due to the fact that a large number of sensing nodes are provided in the cellular environment and the sensing signals interfere with each other is solved.

### Third embodiment

FIG. 3 shows a flowchart of a network collaborative sensing method according to another embodiment of the present disclosure. As shown in FIG. 3, a network collaborative sensing method according to an embodiment of the present disclosure is applied to a first node, and includes the following operations S301 to S304.

Operation S301 includes acquiring first sensing information for a sensing target, and determining, based on the first sensing information, one second node in a plurality of second nodes and one third node in a plurality of third nodes.

Operation S302 includes sending the first sensing information to the second node so that the second node sends a second sensing signal to the sensing target.

Operation S303 includes acquiring second sensing information for the sensing target from the third node, where the second sensing information is obtained by sensing the sensing target by the third node based on the second sensing signal.

Operation S304 includes obtaining a sensing result based on the first sensing information and the second sensing information.

According to some embodiments of the present disclosure, acquiring the first sensing information for the sensing target in operation S301 includes: sending a first sensing signal from the first node to the sensing target; and receiving an echo signal of the first sensing signal, and determining the first sensing information for the sensing target based on the echo signal of the first sensing signal.

According to some embodiments of the present disclosure, acquiring the first sensing information for the sensing target in operation S301 includes: receiving an echo signal of the first sensing signal, and determining the first sensing information for the sensing target based on the echo signal of the first sensing signal, where the first sensing signal is a communication signal sent from a fourth node to the sensing target.

The fourth node may be, for example, a UE.

According to some embodiments of the present disclosure, before operation S304, the method further includes:
determining, based on the first sensing information, a further second node in the plurality of second nodes;
sending the first sensing information to the further second node so that the further second node sends a third sensing signal to the sensing target; and
acquiring third sensing information for the sensing target from the further second node, where the third sensing information is obtained by sensing the sensing target by the further second node based on the third sensing signal.

According to some embodiments of the present disclosure, before operation S304, the method further includes:
determining, based on the first sensing information, a further second node in the plurality of second nodes and a further third node in the plurality of third nodes;
sending the first sensing information to the further second node so that the further second node sends a third sensing signal to the sensing target; and
acquiring third sensing information for the sensing target from the further third node, where the third sensing information is obtained by sensing the sensing target by the further third node based on the third sensing signal.

According to some embodiments of the present disclosure, operation S304 may include:
obtaining a sensing result based on the first sensing information, the second sensing information, and the third sensing information.

According to some embodiments of the present disclosure, the first sensing information for the sensing target includes: first position information for the sensing target, first velocity information for the sensing target, and first direction information for the sensing target. The second sensing information for the sensing target includes: second position information for the sensing target, second velocity information for the sensing target, and second direction information for the sensing target. The third sensing information for the sensing target includes: third position information for the sensing target, third velocity information for the sensing target, and third direction information for the sensing target. The third sensing information is more precise than the second sensing information, and the second sensing information is more precise than the first sensing information.

According to some embodiments of the present disclosure, in operation S301, determining, based on the first sensing information, the one second node in the plurality of second nodes and the one third node in the plurality of third nodes includes:
determining, based on the first position information for the sensing target, a second node closest to the sensing target in the plurality of second nodes, and a third node closest to the sensing target in the plurality of third nodes, and/or
determining, based on the first velocity for the sensing target, a second node which enables a maximum radial velocity of the sensing target in the plurality of second nodes, and a third node which enables a maximum radial velocity of the sensing target in the plurality of third nodes. Here, the radial velocity is a velocity component of the motion of the sensing target in the observer's line of sight direction, i.e., a projection of a velocity vector in the line of sight direction. If the radial velocity has a positive value, it indicates that the target is moving away from the observation point, and if the radial velocity has a negative value, it indicates that the target is approaching the observation point.

According to some embodiments of the present disclosure, relative positions of the first, second, and third nodes are known.

It should be noted that, in this embodiment, the first node may be an integrated sensing and communication main base station, while each of the one second node, the further second node, the one third node and the further third node may be a UE. Alternatively, the one second node and the one third node are UEs, while the further second node and the further third node are slave base stations. In other words, one set of second node and third node may be implemented by one slave base station.

According to the embodiment of the present disclosure, by acquiring first sensing information for a sensing target, and determining, based on the first sensing information, one second node in a plurality of second nodes and one third node in a plurality of third nodes; sending the first sensing information to the second node so that the second node sends a second sensing signal to the sensing target; acquiring second sensing information for the sensing target from the third node, where the second sensing information is obtained by sensing the sensing target by the third node based on the second sensing signal; and obtaining a sensing result based on the first sensing information and the second sensing information, the performance of collaborative sensing in a cellular network can be further improved, and a more precise sensing result of a sensing target can be obtained, while the breadth of the sensing range and the sensing precision are also considered.

Therefore, the problem that the sensing performance is reduced and cannot meet the sensing requirement due to the fact that a large number of sensing nodes are provided in the cellular environment and the sensing signals interfere with each other is solved.

### Fourth Embodiment

In the above embodiments, the first node may be an integrated sensing and communication main base station in a cellular system, and the second node may be an integrated sensing and communication slave base station or UE, which will be described in detail below.

The main base station in the present disclosure is an integrated sensing and communication main base station, which has the characteristics of high power, wide coverage, long distance from a sensing target, and limited sensing precision, and is configured to primarily sense the target to reduce the sensing range. The slave base station in the present disclosure is an integrated sensing and communication slave base station, which has the characteristics of low power, small coverage area and high precision in close-range target sensing, and is used for fine sensing of the target. Relative positions of the main base station and the respective slave base stations are known. The UE is a user equipment, and is configured to perform collaborative sensing with the main base station. Relative positions of the main base station and the respective UEs are known.

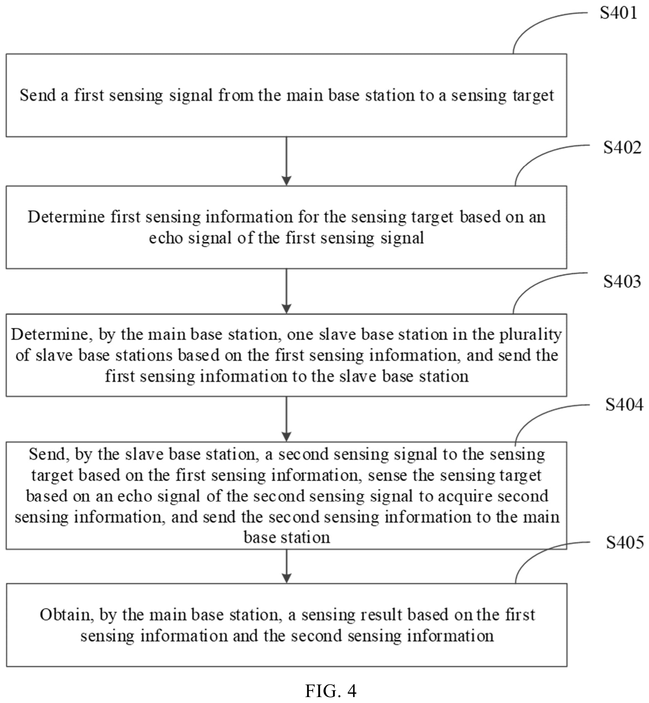

FIG. 4 shows a flowchart of a network collaborative sensing method according to another embodiment of the present disclosure. As shown in FIG. 4, a network collaborative sensing method according to an embodiment of the present disclosure is applied to an integrated sensing and communication base station, where the integrated sensing and communication base station includes a main base station and a plurality of slave base stations, and the method includes the following operations S401 to S405.

Operation S401 includes sending a first sensing signal from the main base station to a sensing target.

Operation S402 includes determining first sensing information for the sensing target based on an echo signal of the first sensing signal.

Operation S403 includes determining, by the main base station, one slave base station in the plurality of slave base stations based on the first sensing information, and sending the first sensing information to the slave base station.

Operation S404 includes sending, by the slave base station, a second sensing signal to the sensing target based on the first sensing information, sensing the sensing target based on an echo signal of the second sensing signal to acquire second sensing information, and sending the second sensing information to the main base station.

Operation S405 includes obtaining, by the main base station, a sensing result based on the first sensing information and the second sensing information.

After operation S404, the method may further include: sensing, by the main base station, the sensing target based on an echo signal of the second sensing signal to obtain third sensing information.

Operation S405 may further include: obtaining, by the main base station, a sensing result based on the first sensing information, the second sensing information, and the third sensing information.

Therefore, the main base station can receive the second sensing information from the slave base station, and receive an echo signal of the second sensing signal, and sense the sensing target based on the echo signal of the second sensing signal to obtain third sensing information, so that the first sensing information, the second sensing information, and the third sensing information can be fused.

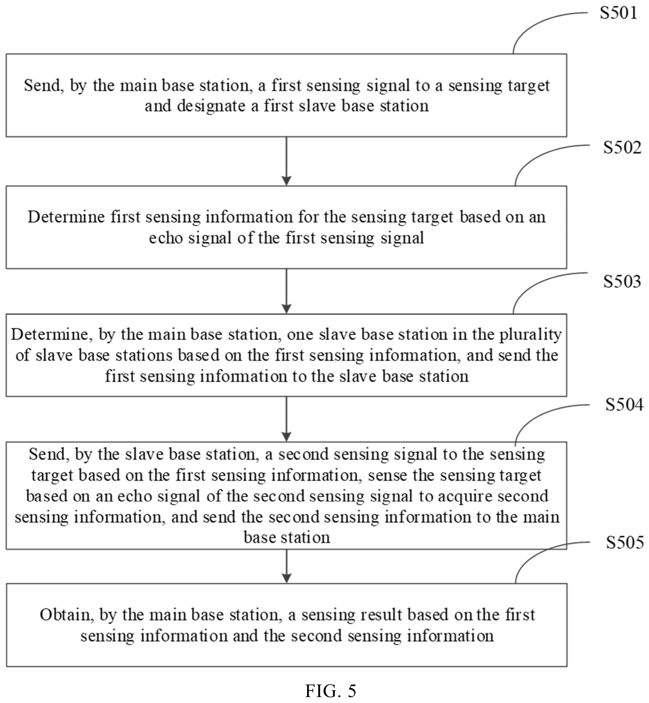

FIG. 5 shows a flowchart of a network collaborative sensing method according to another embodiment of the present disclosure. As shown in FIG. 5, a network collaborative sensing method according to an embodiment of the present disclosure is applied to an integrated sensing and communication main base station and a plurality of slave base stations, where the method includes the following operations S501 to S505.

Operation S501 includes sending, by the main base station, a first sensing signal to a sensing target and designating a first slave base station.

Operation S502 includes determining, by the first slave base station, first sensing information for the sensing target based on an echo signal of the first sensing signal, and sending the first sensing information to the main base station.

Operation S503 includes determining, by the main base station, one second slave base station in the plurality of slave base stations based on the first sensing information, and sending the first sensing information to the second slave base station.

Operation S504 includes sending, by the second slave base station, a second sensing signal to the sensing target based on the first sensing information, sensing the sensing target based on an echo signal of the second sensing signal to acquire second sensing information, and sending the second sensing information to the main base station.

Operation S505 includes obtaining, by the main base station, a sensing result based on the first sensing information and the second sensing information.

After operation S504, the method may further include: sensing, by the main base station, the sensing target based on an echo signal of the second sensing signal to obtain third sensing information.

Operation S505 may further include: obtaining, by the main base station, a sensing result based on the first sensing information, the second sensing information, and the third sensing information.

Therefore, the main base station can receive the second sensing information from the second slave base station, and receive an echo signal of the second sensing signal, and sense the sensing target based on the echo signal of the second sensing signal to obtain third sensing information, so that the first sensing information, the second sensing information, and the third sensing information can be fused.

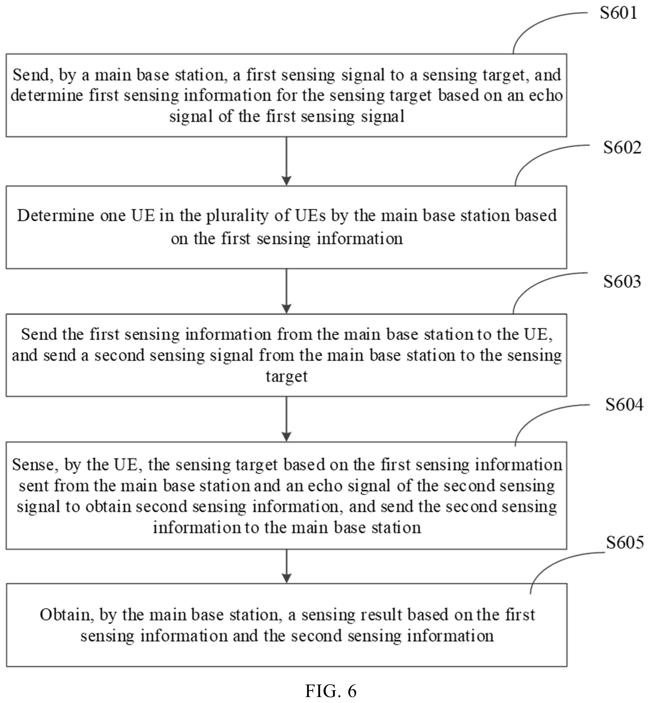

FIG. 6 shows a flowchart of a network collaborative sensing method according to another embodiment of the present disclosure. As shown in FIG. 6, a network collaborative sensing method according to an embodiment of the present disclosure is applied to an integrated sensing and communication main base station and a plurality of UEs, where the method includes the following operations S601 to S605.

Operation S601 includes sending, by the main base station, a first sensing signal to a sensing target, and determining first sensing information for the sensing target based on an echo signal of the first sensing signal.

Operation S602 includes determining one UE in the plurality of UEs by the main base station based on the first sensing information.

Operation S603 includes sending the first sensing information from the main base station to the UE, and sending a second sensing signal from the main base station to the sensing target.

Operation S604 includes sensing, by the UE, the sensing target based on the first sensing information sent from the main base station and an echo signal of the second sensing signal to obtain second sensing information, and sending the second sensing information to the main base station.

Operation S605 includes obtaining, by the main base station, a sensing result based on the first sensing information and the second sensing information.

Therefore, the main base station and the UE are used for collaborative sensing and result fusion in the region, so that a comprehensive sensing result of the target can be obtained while the breadth of the sensing range and the sensing precision are considered.

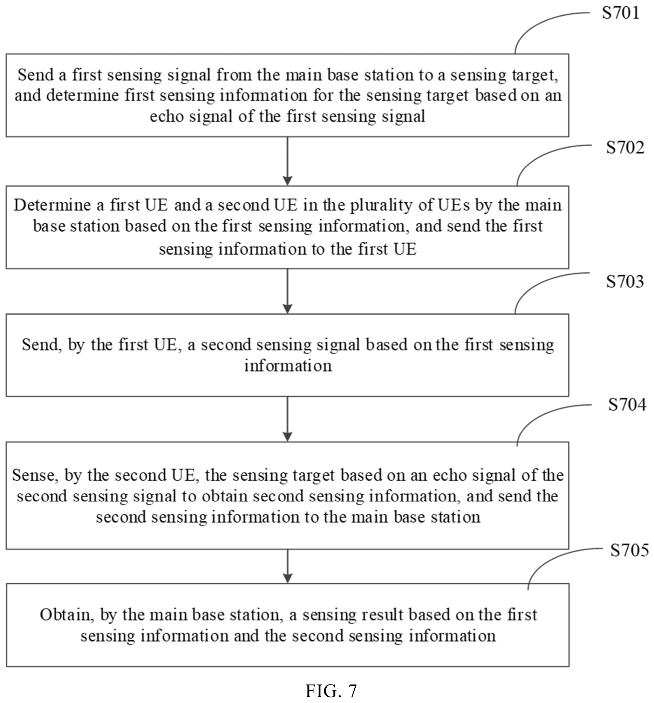

FIG. 7 shows a flowchart of a network collaborative sensing method according to another embodiment of the present disclosure. As shown in FIG. 7, a network collaborative sensing method according to an embodiment of the present disclosure is applied to an integrated sensing and communication main base station and a plurality of UEs, where the plurality of UEs include a first UE and a second UE, and the method includes the following operations S701 to S705.

Operation S701 includes sending a first sensing signal from the main base station to a sensing target, and determining first sensing information for the sensing target based on an echo signal of the first sensing signal.

Operation S702 includes determining a first UE and a second UE in the plurality of UEs by the main base station based on the first sensing information, and sending the first sensing information to the first UE.

Operation S703 includes sending, by the first UE, a second sensing signal based on the first sensing information.

Operation S704 includes sensing, by the second UE, the sensing target based on an echo signal of the second sensing signal to obtain second sensing information, and sending the second sensing information to the main base station.

Operation S705 includes obtaining, by the main base station, a sensing result based on the first sensing information and the second sensing information.

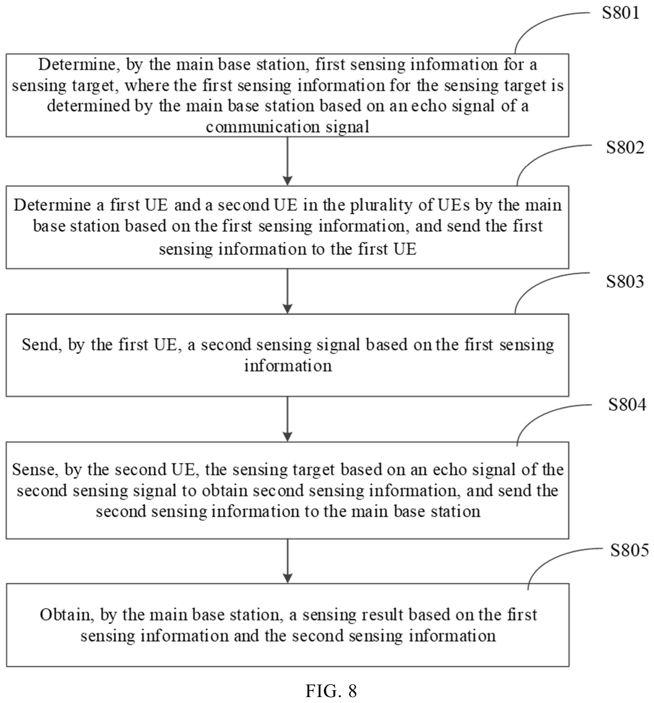

FIG. 8 shows a flowchart of a network collaborative sensing method according to another embodiment of the present disclosure. As shown in FIG. 8, a network collaborative sensing method according to an embodiment of the present disclosure is applied to an integrated sensing and communication main base station and a plurality of UEs, where the plurality of UEs include a first UE and a second UE, and the method includes the following operations S801 to S805.

Operation S801 includes determining, by the main base station, first sensing information for a sensing target, where the first sensing information for the sensing target is determined by the main base station based on an echo signal of a communication signal sent from a UE.

Operation S802 includes determining a first UE and a second UE in the plurality of UEs by the main base station based on the first sensing information, and sending the first sensing information to the first UE.

Operation S803 includes sending, by the first UE, a second sensing signal based on the first sensing information.

Operation S804 includes sensing, by the second UE, the sensing target based on an echo signal of the second sensing signal to obtain second sensing information, and sending the second sensing information to the main base station.

Operation S805 includes obtaining, by the main base station, a sensing result based on the first sensing information and the second sensing information.

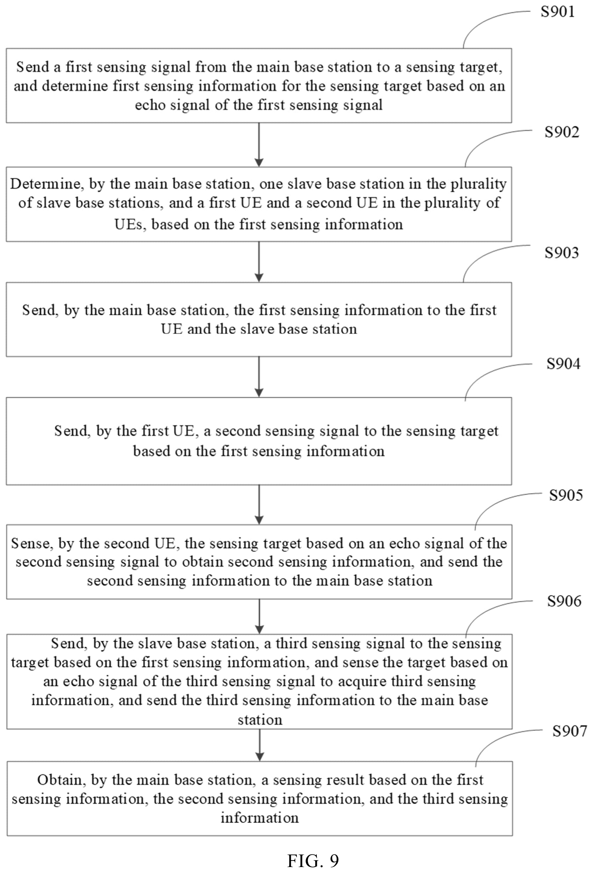

FIG. 9 shows a flowchart of a network collaborative sensing method according to another embodiment of the present disclosure. As shown in FIG. 9, a network collaborative sensing method according to an embodiment of the present disclosure is applied to an integrated sensing and communication base station and a plurality of UEs, where the integrated sensing and communication base station includes a main base station and a plurality of slave base stations, the plurality of UEs include a first UE and a second UE, and the method includes the following operations S901 to S905.

Operation S901 includes sending a first sensing signal from the main base station to a sensing target, and determining first sensing information for the sensing target based on an echo signal of the first sensing signal.

Operation S902 includes determining, by the main base station, one slave base station in the plurality of slave base stations, and a first UE and a second UE in the plurality of UEs, based on the first sensing information.

Operation S903 includes sending, by the main base station, the first sensing information to the first UE and the slave base station.

Operation S904 includes sending, by the first UE, a second sensing signal to the sensing target based on the first sensing information.

Operation S905 includes sensing, by the second UE, the sensing target based on an echo signal of the second sensing signal to obtain second sensing information, and sending the second sensing information to the main base station.

Operation S906 includes sending, by the slave base station, a third sensing signal to the sensing target based on the first sensing information, and sensing the target based on an echo signal of the third sensing signal to acquire third sensing information, and sending the third sensing information to the main base station.

Operation S907 includes obtaining, by the main base station, a sensing result based on the first sensing information, the second sensing information, and the third sensing information.

The above embodiments of the present disclosure will be described in detail below in conjunction with examples. Examples 1 to 6 correspond to the embodiments of FIGs. 4 to 9, respectively.

### Example 1

### Collaborative sensing of main base station and slave base stations

A cellular system is provided with a plurality of integrated sensing and communication base stations, one of which is a sensing main base station, while the other are sensing slave base stations. The main and slave base stations cooperate to sense a certain region, and relative positions of the main base station and the slave base stations are known.

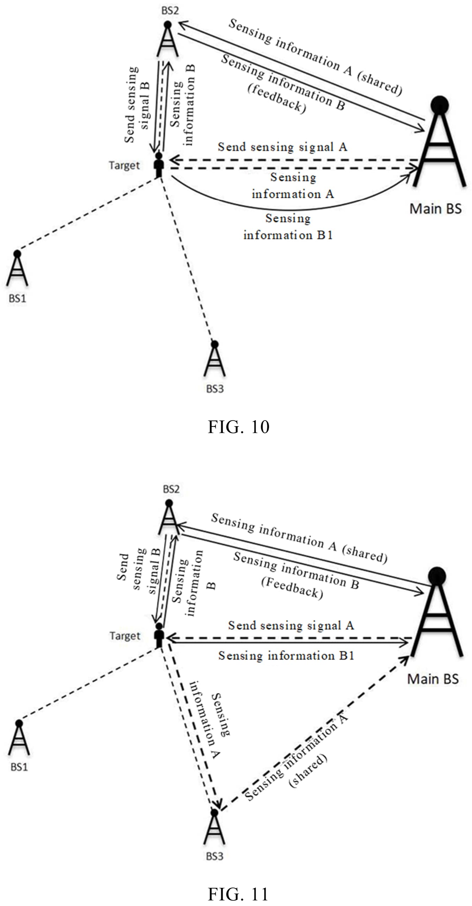

FIG. 10 shows a schematic diagram of a network collaborative sensing system according to an embodiment of the present disclosure. As shown in FIG. 10, Main BS is a sensing main base station, which has the characteristics of high power, wide coverage, long distance from a sensing target, and limited sensing precision, and is configured to primarily sense the target to reduce the sensing range. BS1, BS2 and BS3 are sensing slave base stations, which have the characteristics of low power, small coverage area and high precision in close-range target sensing, and are used for fine sensing of the target. Relative positions of the main base station and the respective slave base stations are known. Target is a sensing target in a certain region, in which the main base station and the slave base stations are used for collaborative sensing and result fusion, so that a comprehensive sensing result of the target can be obtained while the breadth of the sensing range and the sensing precision are considered.

The process may be as follows.

The main base station Main BS sends a sensing signal A, and determines, based on an echo signal from the target (hereinafter, referred to as a target echo signal), sensing information for the target, which is denoted as sensing information A, including a position, a velocity, a direction, and the like.

Based on the sensing information A carried in the target echo signal, the main base station Main BS analyzes and selects a slave base station most suitable for a collaborative sensing task. The selection criterion may be set based on specific situations, such as a slave base station closest to a position of the sensing target, a slave base station enabling a maximum radial velocity of the sensing target in a direction from the slave base station to the sensing target, and the like. After a slave base station BS2 for executing the task is selected, the Main BS shares the sensing information A carried in the target echo signal to BS2.

The slave base station BS2 starts to execute the collaborative sensing task, and sends a sensing signal B based on the position, the velocity, the direction, and other information provided in the sensing information A, for example, determines a transmission beam, a period, a power, and the like of the sensing signal B from the sensing information A, and obtains sensing information B through a target echo signal. The sensing information B is more precise than the sensing information A.

When necessary, the main base station Main BS receives an echo signal of the sensing signal B, the sensing signal B being sent from the slave base station BS2, and senses the target based on the echo signal of the sensing signal B to obtain sensing information B1, so that the sensing information B1, the sensing information A received by the main base station, and the sensing information B fed back from the slave base station BS2 can be fused.

### Example 2

### Collaborative sensing of main base station and slave base stations

A cellular system is provided with a plurality of integrated sensing and communication base stations, one of which is a sensing main base station, while the other are sensing slave base stations. The main and slave base stations cooperate to sense a certain region, and relative positions of the main base station and the slave base stations are known.

FIG. 11 shows a schematic diagram of a network collaborative sensing system according to another embodiment of the present disclosure. As shown in FIG. 11, Main BS is a sensing main base station, BS1, BS2 and BS3 are sensing slave base stations. Relative positions of the main base station and the respective slave base stations are known. Target is a sensing target in a certain region, in which the main base station and the slave base stations are used for collaborative sensing and result fusion.

The process may include the following operations: the main base station Main BS sends a sensing signal A, and designates a slave base station BS3 to receive an echo signal corresponding to the sensing signal A. Further, the slave base station BS3 determines, based on the echo signal of the sensing signal, sensing information for the sensing target, which is denoted as sensing information A, including a position, a velocity, and the like.

The slave base station BS3 shares the sensing information A to the main base station Main BS.

Based on the shared sensing information A, the main base station Main BS analyzes and further selects a slave base station most suitable for sending a sensing signal. The selection criterion may be set based on specific situations, such as a slave base station closest to a position of the sensing target, a slave base station enabling a maximum radial velocity of the sensing target in a direction from the slave base station to the sensing target, and the like. After a slave base station BS2 for further executing the task is selected, the main base station Main BS serves as a relay to share the sensing information A received from the slave base station BS3 and carried in the target echo signal to the slave base station BS2.

The slave base station BS2 starts to execute the collaborative sensing task, and sends a sensing signal B based on the position, the velocity, the direction, and other information provided in the sensing information A, for example, determines a transmission beam, a period, a power, and the like of the sensing signal B from the sensing information A, and obtains sensing information B through a target echo signal. The sensing information B is more precise than the sensing information A.

When necessary, the main base station Main BS receives an echo signal of the sensing signal B, the sensing signal B being sent from the slave base station BS2, and senses the target based on the echo signal of the sensing signal B to obtain sensing information B1, so that the sensing information B1, the sensing information A shared from the slave base station BS3, and the sensing information B fed back from the slave base station BS2 can be fused.

### Example 3

### Collaborative sensing of base station and UEs

A cellular system is provided with one integrated sensing and communication base station, and a plurality of UEs for receiving sensing signals. The base station sends sensing signals. The main base station and the UEs cooperate to sense a certain region. Relative positions of the main base station and the UEs are known.

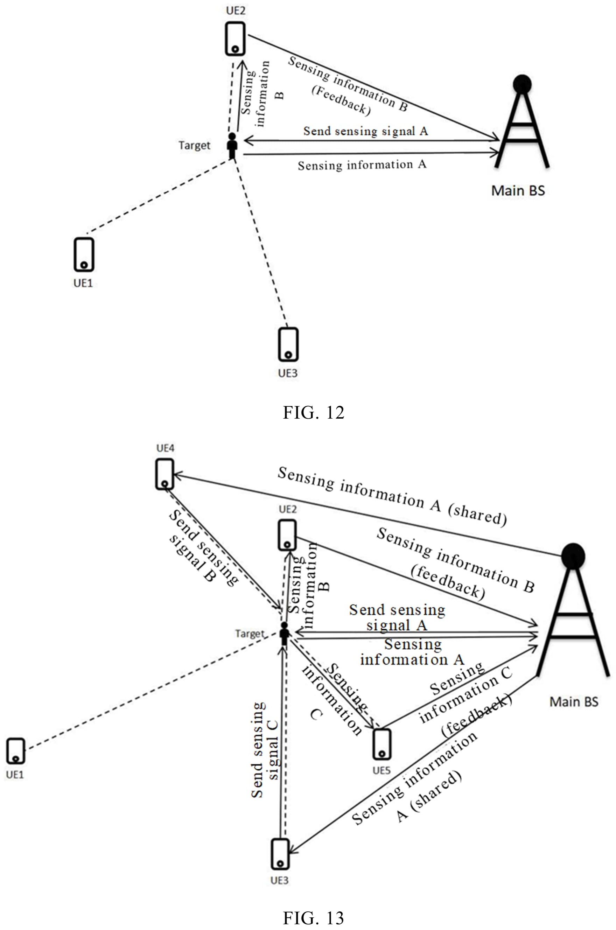

FIG. 12 shows a schematic diagram of a network collaborative sensing system according to another embodiment of the present disclosure. As shown in FIG. 12, Main BS is a sensing main base station, which is configured to send sensing signals, and primarily sense information for a target to reduce the sensing range. UE1, UE2, and UE3 are user equipments, which are configured to perform collaborative sensing with the main base station. Relative positions of the main base station and the respective UEs are known. Target is a sensing target in a certain region.

The process may be as follows.

The main base station Main BS sends a sensing signal A to the target Target, and determines, based on a target echo signal, sensing information for Target, which is denoted as sensing information A, including a position, a velocity, a direction, and the like.

Based on the sensing information A carried in the target echo signal, the main base station Main BS analyzes and selects a UE most suitable for a collaborative sensing task. The selection criterion may be set based on specific situations, such as a UE closest to a position of the sensing target, a UE enabling a maximum radial velocity of the sensing target in a direction from the UE to the sensing target, and the like. The UE executing the task is called a sensing UE. The sensing UE selected in the diagram is UE2, so UE2 starts to participate in the collaborative sensing task.

The main base station Main BS continues to send the sensing signal, and the UE2 receives the sensing signal from the main base station and senses the target based on an echo signal of the sensing signal to obtain sensing information B.

UE2 feeds the sensing information B back to Main BS, and the main base station fuses the sensing information A and the sensing information B.

### Example 4

Inter-UE collaborative sensing controlled by base station:
A cellular system is provided with one integrated sensing and communication base station, and a plurality of UEs for receiving sensing signals. The base station determines a sensing region and a sensing UE, and selects a part of the UEs to send sensing signals, and another part of the UEs to receive sensing signals.

FIG. 13 shows a schematic diagram of a network collaborative sensing system according to another embodiment of the present disclosure. As shown in FIG. 13, Main BS is a sensing main base station, which is configured to send sensing signals, primarily sense information for the target, determine a sensing region and a sending UE, and perform an overall control on collaborative sensing among the UEs. UE1, UE2, UE3, UE4 and UE5 are user equipments, from which sending and receiving UEs for collaborative sensing are selected. Relative positions of the main base station and the respective UEs are known. Target is a sensing target in a certain region.

The process may include the following operations: the main base station Main BS sends a sensing signal A to the target Target, and determines, based on a target echo signal, sensing information for Target, which is denoted as sensing information A, including a position, a velocity, a direction, and the like.

Based on the sensing information A carried in the target echo signal, the main base station Main BS analyzes and selects a UE most suitable for a collaborative sensing task. The selection criterion may be set based on specific situations, such as a UE closest to a position of the sensing target, a UE enabling a maximum radial velocity of the sensing target in a direction from the UE to the sensing target, and the like. The UE for executing the task includes a sensing UE and a receiving UE. The sensing UEs selected in the diagram are UE4 and UE3, while the receiving UEs are UE2 and UE5.

The main base station Main BS shares the sensing information A to UE4 and UE3, which determine the characteristics, such as transmission beams, periods, powers, and the like, of a sensing signal B and a sensing signal C based on the sensing information A, respectively.

UE4 sends the sensing signal B. UE3 sends the sensing signal C. UE2 senses the target based on an echo signal of the sensing signal B to obtain sensing information B. UE5 senses the target based on an echo signal of the sensing signal C to obtain sensing information C.

UE2 feeds the sensing information B back to the main base station Main BS, and UE5 feeds the sensing information C back to the main base station Main BS.

The main base station Main BS fuses the sensing information A, B and C.

### Example 5

### Inter-UE collaborative sensing controlled by base station

A cellular system is provided with one integrated sensing and communication base station, and a plurality of UEs for receiving sensing signals. The base station is used for determining a sensing region and a sensing UE, and a part of the UEs is selected to send sensing signals, and another part of the UEs is selected to receive sensing signals.

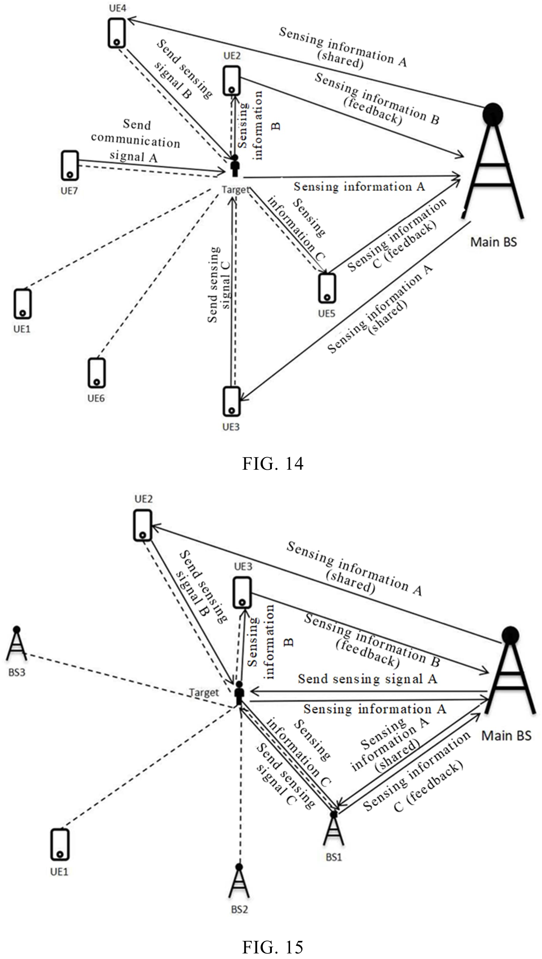

FIG. 14 shows a schematic diagram of a network collaborative sensing system according to another embodiment of the present disclosure. As shown in FIG. 14, Main BS is a sensing main base station, which is configured to determine sensing information for a sensing target and a sensing region, select a sensing UE, and perform an overall control on collaborative sensing among the UEs. UE1, UE2, UE3, UE4, UE5, UE6 and UE7 are user equipments, which are configured to send communication signals and sensing signals, and receive target echo signals, where the communication signals sent from the UEs may also be used for sensing, and a sending UE and a receiving UE are selected from the UEs to participate in collaborative sensing. Relative positions of the main base station and the respective user equipments are known. Target is a sensing target in a certain region.

The process may include the following operations: UE7 sends a communication signal A, and the main base station Main BS determines, based on a target echo signal of the communication signal A, a position, a velocity and the like of a target, which is denoted as sensing information A.

Based on the sensing information A, the main base station Main BS further selects the UEs participating in collaborative sensing to send and receive sensing signals, for example, selects several UEs closest to a position of the sensing target, or several UEs enabling a maximum radial velocity. UE4 and UE3 are selected in the diagram as user equipments for sending sensing signals, and UE2 and UE5 are selected as user equipments for receiving echo signals of the sensing signals.

The main base station Main BS shares the sensing information A to UE4 and UE3, which determine the characteristics, such as transmission beams, periods, powers, and the like, of a sensing signal B and a sensing signal C based on the sensing information A, respectively.

UE4 sends the sensing signal B. UE3 sends the sensing signal C. UE2 senses the target based on an echo signal of the sensing signal B to obtain sensing information B. UE5 senses the target based on an echo signal of the sensing signal C to obtain sensing information C.

UE2 feeds the sensing information B back to the main base station Main BS, and UE5 feeds the sensing information C back to the main base station Main BS.

The main base station Main BS fuses the sensing information A, B and C.

### Example 6

UE sending sensing signal - UE sensing + base station sending sensing signal - base station sensing/data fusion;

A cellular system is provided with a plurality of integrated sensing and communication base stations, and a plurality of UEs, where one of the plurality of base stations is a sensing main base station, while the other are sensing slave base stations; and one sending UE and one receiving UE are selected among the plurality of UEs. The main base station, the slave base stations, the sending UE and the receiving UE cooperate to sense a certain region, and relative positions of the main base station, the slave base stations and the UEs are known.

FIG. 15 shows a schematic diagram of a network collaborative sensing system according to another embodiment of the present disclosure. As shown in FIG. 15, Main BS is a sensing main base station, which is configured to send sensing signals, primarily sense information for a target, determine a sensing region and a sensing UE, and perform an overall control on collaborative sensing of the UEs and the base stations. BS1, BS2 and BS3 are slave base stations, and UE1, UE2, and UE3 are user equipments, from which the slave base station, the sending UE and the receiving UE for a collaborative sensing task are selected. Relative positions of the main base station and the respective user equipments are known. Target is a sensing target in a certain region. The process may include the following operations.

The main base station Main BS sends a sensing signal A to the target Target, and determines, based on a target echo signal, sensing information for Target, which is denoted as sensing information A, including a position, a velocity, a direction, and the like.

Based on the sensing information A carried in the target echo signal, the main base station Main BS analyzes and selects the UE and the slave base station most suitable for a collaborative sensing task. The selection criterion may be set based on specific situations, such as a UE or a slave base station closest to a position of the sensing target, a UE or a slave base station enabling a maximum radial velocity of the sensing target in a direction from the UE or slave base station to the sensing target, and the like. In the diagram, a sensing user equipment UE2, a receiving user equipment UE3 and a slave base station BS1 are selected.

The main base station Main BS shares the sensing information A to UE2 and the slave base station BS1, which determine the characteristics, such as transmission beams, periods, powers, and the like, of a sensing signal B and a sensing signal C based on the sensing information A, respectively.

UE2 sends the sensing signal B. UE3 senses the target based on an echo signal of the sensing signal to obtain sensing information B. The slave base station BS1 sends the sensing signal C, and senses the target based on an echo signal of the sensing signal to obtain sensing information C.

UE3 feeds the sensing information B back to Main BS, and BS1 feeds the sensing information C back to Main BS, and the main base station fuses the sensing information A, B and C.

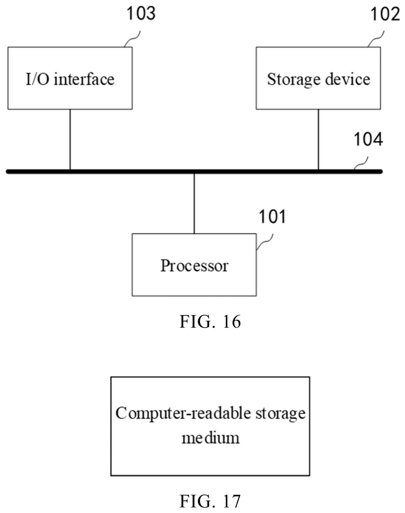

Referring to FIG. 16, an embodiment of the present disclosure provides an electronic device, including: one or more processors 101; and a storage device 102 having one or more computer programs stored thereon which, when executed by the one or more processors 101, cause the one or more processors to implement the network collaborative sensing method according to any embodiment of the present disclosure.

In addition, the electronic device may further include one or more I/O interfaces 103 connected between the processor 101 and the storage device 102, and configured to enable information interaction between the processor 101 and the storage device 102.

The processor 101 is a device with a data processing capability, including but not limited to a central processing unit (CPU), or the like. The storage device 102 is a device with a data storage capability, including but not limited to, a random access memory (RAM, such as SDRAM, DDR, etc.), a read-only memory (ROM), an electrically erasable programmable read-only memory (EEPROM) or a flash memory (FLASH). The I/O interface (read/write interface) 103 is connected between the processor 101 and the storage device 102 to enable information interaction between the processor 101 and the storage device 102, and includes, but is not limited to, a data bus or the like.

In some embodiments, the processor 101, the storage device 102, and the I/O interface 103 are interconnected via a bus 104, and further connected to other components of a computing device.

Referring to FIG. 17, an embodiment of the present disclosure provides a computer-readable storage medium storing a computer program thereon which, when executed by a processor, causes the processor to implement the network collaborative sensing method according to any embodiment of the present disclosure.

Those of ordinary skill in the art will appreciate that all or some operations of the above described method, function modules/units in the system and apparatus may be implemented as software, firmware, hardware, and suitable combinations thereof. In a hardware implementation, the division between the function modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A network collaborative sensing method, applied to a first node, comprising:
acquiring first sensing information for a sensing target, and determining one second node in a plurality of second nodes based on the first sensing information;
sending the first sensing information to the one second node;
acquiring, from the one second node, second sensing information for the sensing target, wherein the second sensing information is obtained by sensing the sensing target by the one second node; and
obtaining a sensing result based on the first sensing information and the second sensing information.

2. The method according to claim 1, wherein the method further comprises:
acquiring third sensing information for the sensing target, wherein the third sensing information is obtained by sensing the sensing target based on a second sensing signal sent from the one second node; and
obtaining a sensing result based on the first sensing information, the second sensing information, and the third sensing information.

3. The method according to claim 1, wherein acquiring the first sensing information for the sensing target comprises:
sending a first sensing signal from the first node to the sensing target; and
receiving an echo signal of the first sensing signal, and determining the first sensing information for the sensing target based on the echo signal of the first sensing signal.

4. The method according to claim 1, wherein acquiring the first sensing information for the sensing target comprises:
sending a first sensing signal from the first node to the sensing target, and designating a third node for receiving an echo signal of the first sensing signal; and
receiving the first sensing information for the sensing target sent from the third node, wherein the first sensing information is determined by the third node based on the echo signal of the first sensing signal.

5. The method according to claim 1, wherein
the second sensing information is obtained by the one second node based on an echo signal of a second sensing signal, the second sensing signal being sent by the one second node to the sensing target based on the first sensing information.

6. The method according to claim 1, wherein
the second sensing information is obtained by the one second node based on an echo signal of a first sensing signal, the first sensing signal being sent by the first node to the sensing target.

7. The method according to claim 2, wherein
acquiring the third sensing information for the sensing target comprises: receiving an echo signal of the second sensing signal sent from the one second node to the sensing target, and acquiring the third sensing information based on the echo signal.

8. The method according to claim 1, wherein the first sensing information for the sensing target comprises: first position information for the sensing target, first velocity information for the sensing target, and first direction information for the sensing target.

9. The method according to claim 1, wherein the second sensing information for the sensing target comprises: second position information for the sensing target, second velocity information for the sensing target, and second direction information for the sensing target.

10. The method according to claim 1, wherein the second sensing information is more precise than the first sensing information.

11. The method according to claim 8, wherein determining the one second node in the plurality of second nodes based on the first sensing information comprises:
determining, based on the first position information for the sensing target, a second node closest to the sensing target in the plurality of second nodes, and/or
determining, based on the first velocity information for the sensing target, a second node which enables a maximum radial velocity of the sensing target in the plurality of second nodes.

12. The method according to claim 4, wherein relative positions of the first, second, and third nodes are known.

13. A network collaborative sensing method, applied to a second node, comprising:
receiving first sensing information sent from a first node; and
sensing a sensing target based on the first sensing information to obtain second sensing information for the sensing target, and sending the second sensing information to the first node so that the first node senses the sensing target based on the first sensing information and the second sensing information.

14. The method according to claim 13, wherein sensing the sensing target based on the first sensing information to obtain the second sensing information for the sensing target comprises:
sending a second sensing signal to the sensing target based on the first sensing information; and
receiving an echo signal of the second sensing signal, and determining the second sensing information for the sensing target based on the echo signal of the second sensing signal.

15. The method according to claim 13, wherein the first sensing information is obtained by sensing the sensing target by the first node.

16. The method according to claim 13, wherein the first sensing information is obtained by sensing the sensing target by a third node, wherein the third node is designated by the first node.

17. The method according to claim 14, wherein sending the second sensing signal to the sensing target based on the first sensing information comprises:
determining, based on the first sensing information, a transmission beam, a period and/or a power of the second sensing signal; and
sending the second sensing signal to the sensing target based on the transmission beam, the period and/or the power of the second sensing signal.

18. A network collaborative sensing method, applied to a first node, comprising:
acquiring first sensing information for a sensing target, and determining, based on the first sensing information, one second node in a plurality of second nodes and one third node in a plurality of third nodes;
sending the first sensing information to the one second node so that the one second node sends a second sensing signal to the sensing target;
acquiring second sensing information for the sensing target from the one third node, wherein the second sensing information is obtained by sensing the sensing target by the one third node based on the second sensing signal; and
obtaining a sensing result based on the first sensing information and the second sensing information.

19. The method according to claim 18, wherein acquiring the first sensing information for the sensing target comprises:
sending a first sensing signal from the first node to the sensing target; and
receiving an echo signal of the first sensing signal, and determining the first sensing information for the sensing target based on the echo signal of the first sensing signal.

20. The method according to claim 18, wherein acquiring the first sensing information for the sensing target comprises:
receiving an echo signal of a first sensing signal, and determining the first sensing information for the sensing target based on the echo signal of the first sensing signal, wherein the first sensing signal is a communication signal sent from a fourth node to the sensing target.

21. The method according to claim 18, wherein before obtaining the sensing result based on the first sensing information and the second sensing information, the method further comprises:
determining a further second node in the plurality of second nodes based on the first sensing information;
sending the first sensing information to the further second node so that the further second node sends a third sensing signal to the sensing target; and
acquiring third sensing information for the sensing target from the further second node, wherein the third sensing information is obtained by sensing the sensing target by the further second node based on the third sensing signal.

22. The method according to claim 18, wherein before obtaining the sensing result based on the first sensing information and the second sensing information, the method further comprises:
determining, based on the first sensing information, a further second node in the plurality of second nodes and a further third node in the plurality of third nodes;
sending the first sensing information to the further second node so that the further second node sends a third sensing signal to the sensing target; and
acquiring third sensing information for the sensing target from the further third node, wherein the third sensing information is obtained by sensing the sensing target by the further third node based on the third sensing signal.

23. The method according to claim 21 or 22, wherein
obtaining the sensing result based on the first sensing information and the second sensing information comprises:
obtaining the sensing result based on the first sensing information, the second sensing information, and the third sensing information.

24. A network collaborative sensing method, applied to an integrated sensing and communication base station, wherein the integrated sensing and communication base station comprises a main base station and a plurality of slave base stations, and the method comprises:
sending a first sensing signal from the main base station to a sensing target;
determining first sensing information for the sensing target based on an echo signal of the first sensing signal;
determining, by the main base station, one slave base station in the plurality of slave base stations based on the first sensing information, and sending the first sensing information to the one slave base station;
sending, by the one slave base station, a second sensing signal to the sensing target based on the first sensing information, sensing the sensing target based on an echo signal of the second sensing signal to acquire second sensing information, and sending the second sensing information to the main base station; and
obtaining, by the main base station, a sensing result based on the first sensing information and the second sensing information.

25. A network collaborative sensing method, applied to an integrated sensing and communication base station, wherein the integrated sensing and communication base station comprises a main base station and a plurality of slave base stations comprising a first slave base station and a second slave base station, and the method comprises:
sending, by the main base station, a first sensing signal to a sensing target and designating a first slave base station;
determining, by the first slave base station, first sensing information for the sensing target based on an echo signal of the first sensing signal, and sending the first sensing information to the main base station;
determining, by the main base station, one second slave base station in the plurality of slave base stations based on the first sensing information;
sending, by the main base station, the first sensing information to the one second slave base station;
sending, by the one second slave base station, a second sensing signal to the sensing target based on the first sensing information, sensing the sensing target based on an echo signal of the second sensing signal to acquire second sensing information, and sending the second sensing information to the main base station; and
obtaining, by the main base station, a sensing result based on the first sensing information and the second sensing information.

26. A network collaborative sensing method, applied to an integrated sensing and communication main base station and a plurality of user equipments (UEs), wherein the method comprises:
sending a first sensing signal from the main base station to a sensing target, and determining first sensing information for the sensing target based on an echo signal of the first sensing signal;
determining one UE in the plurality of UEs by the main base station based on the first sensing information;
sending the first sensing information from the main base station to the one UE, and sending a second sensing signal from the main base station to the sensing target;
sensing, by the one UE, the sensing target based on the first sensing information sent from the main base station and an echo signal of the second sensing signal to obtain second sensing information, and sending the second sensing information to the main base station; and
obtaining, by the main base station, a sensing result based on the first sensing information and the second sensing information.

27. A network collaborative sensing method, applied to an integrated sensing and communication main base station and a plurality of user equipments (UEs), wherein the plurality of UEs comprise a first UE and a second UE, and the method comprises:
sending a first sensing signal from the main base station to a sensing target, and determining first sensing information for the sensing target based on an echo signal of the first sensing signal;
determining a first UE and a second UE in the plurality of UEs by the main base station based on the first sensing information, and sending the first sensing information to the first UE;
sending, by the first UE, a second sensing signal based on the first sensing information;
sensing, by the second UE, the sensing target based on an echo signal of the second sensing signal to obtain second sensing information, and sending the second sensing information to the main base station; and
obtaining, by the main base station, a sensing result based on the first sensing information and the second sensing information.

28. A network collaborative sensing method, applied to an integrated sensing and communication main base station and a plurality of user equipments (UEs), wherein the plurality of UEs comprise a first UE and a second UE, and the method comprises:
determining, by the main base station, first sensing information for a sensing target, wherein the first sensing information for the sensing target is determined by the main base station based on an echo signal of a communication signal sent from a UE;
determining a first UE and a second UE in the plurality of UEs by the main base station based on the first sensing information, and sending the first sensing information to the first UE;
sending, by the first UE, a second sensing signal based on the first sensing information;
sensing, by the second UE, the sensing target based on an echo signal of the second sensing signal to obtain second sensing information, and sending the second sensing information to the main base station; and
obtaining, by the main base station, a sensing result based on the first sensing information and the second sensing information.

29. A network collaborative sensing method, applied to an integrated sensing and communication base station and a plurality of user equipments (UEs), wherein the plurality of UEs comprise a first UE and a second UE, the integrated sensing and communication base station comprises a main base station and a plurality of slave base stations, and the method comprises:
sending a first sensing signal from the main base station to a sensing target, and determining first sensing information for the sensing target based on an echo signal of the first sensing signal;
determining, by the main base station, one slave base station in the plurality of slave base stations, and a first UE and a second UE in the plurality of UEs, based on the first sensing information;
sending, by the main base station, the first sensing information to the first UE and the one slave base station;
sending, by the first UE, a second sensing signal to the sensing target based on the first sensing information;
sensing, by the second UE, the sensing target based on an echo signal of the second sensing signal to obtain second sensing information, and sending the second sensing information to the main base station;
sending, by the one slave base station, a third sensing signal to the sensing target based on the first sensing information, and sensing the target based on an echo signal of the third sensing signal to acquire third sensing information, and sending the third sensing information to the main base station; and
obtaining, by the main base station, a sensing result based on the first sensing information, the second sensing information, and the third sensing information.

30. An electronic device, comprising:
at least one processor; and
a storage device having at least one program stored thereon which, when executed by the at least one processor, causes the at least one processor to implement the network collaborative sensing method according to any one of claims 1 to 12; or causes the at least one processor to implement the network collaborative sensing method according to any one of claims 13 to 17; or causes the at least one processor to implement the network collaborative sensing method according to any one of claims 18 to 23.

31. A computer-readable storage medium storing an executable program thereon which, when executed, causes the network collaborative sensing method according to any one of claims 1 to 12 to be implemented; or, causes the network collaborative sensing method according to any one of claims 13 to 17 to be implemented; or, causes the network collaborative sensing method according to any one of claims 18 to 23 to be implemented.
